Europäisches Patentamt

European Patent Office

Office européen des brevets

(11) Publication number: **0 405 341 A1**

# EUROPEAN PATENT APPLICATION

(21) Application number: 90111813.3

(22) Date of filing: 22.06.90

(51) Int. Cl.5: **C09D 101/28, B05D 5/00**

(30) Priority: 26.06.89 US 372395

(43) Date of publication of application:
02.01.91 Bulletin 91/01

(84) Designated Contracting States:
AT BE DE DK ES FR GB IT NL SE

(71) Applicant: HENKEL CORPORATION
300 Brookside Avenue
Ambler, Pennsylvania 19002(US)

(72) Inventor: Wilk, Christine
3847 Coolidge Road
Troy, Michigan 48084(US)

(74) Representative: von Kreisler, Alek,
Dipl.-Chem. et al
Patentanwälte Von Kreisler-Selting-Werner,
Deichmannhaus am Hauptbahnhof
D-5000 Köln 1(DE)

(54) Masking composition and method.

(57) A masking composition for use in paint spray booths which comprises an aqueous solution or dispersion of a cellulose gum, a plasticizer and preferably a surfactant. The composition is applied to the surfaces and related paint spray booth equipment to mask them from paint overspray during the painting operation. The maskant forms a water soluble film which can easily be removed by washing with water subsequent to the painting operation.

EP 0 405 341 A1

## MASKING COMPOSITION METHOD

## BACKGROUND OF THE INVENTION

### Field of the Invention

This invention relates to a maskant or masking composition and method of employing same in spray painting, particularly in paint spray booths, although the maskant can also be employed to mask parts of an item being painted so that paint is not applied thereto. The maskant composition of the invention is an aqueous composition of a carboxymethyl cellulose gum.

### Statement of Related Art

Spray painting of automobile bodies, engines, appliances and other industrial goods is a conventional means of painting. Such painting is customarily carried out in an enclosed area commonly referred to as a paint spray booth. These booths act to both contain any fumes or oversprayed paint and to reduce chances of dust contamination. Conventionally, a curtain of water is employed to wash the air and to remove oversprayed paint or lacquer solids.

The process of spray booth painting involves many problems, one of which is that the paint or lacquer solids are normally tacky and tend to adhere to the walls, ceilings and floors of the spray booths and to the hoses and automatic spray equipment. This makes it necessary to periodically shut down the painting operation in order to clean the spray booths.

Chemical compositions have been provided which when added to the water used to wash the air and remove oversprayed paint will detackify the paint or lacguer particles. Masking compositions are applied to the spray booth surfaces on which paint overspray build up and which are then removed, preferably daily. Such masking compositions should be easily removed and compatible with detackifying compositions employed in the process. A spray booth maintenance program involves detackifier compositions and maskant compositions designed to be compatible with each other. The maskant composition should permit guick clean up to reduce the time and cost of spray booth maintenance.

Other than in the operating examples, or where otherwise indicated, all numbers expressing quantities of ingredients or reaction conditions used herein are to be understood as modified by the word "about".

## DESCRIPTION OF THE INVENTION

A maskant composition has been discovered which is water washable and provides for easy and quick clean up, particularly in paint spray booth systems. In addition to use in spray booths, the masking composition may also be employed to cover up or mask portions of an item being painted, so that paint is applied only to those portions of article desired to be painted, and keeping paint away from other portions of the article where paint is not desired. After the painted portion is dry, the masking composition can then be easily and quickly washed off the article with water.

The masking composition of the present invention comprises an aqueous film forming solution or dispersion of a carboxymethyl cellulose polymer described in more detail hereafter, containing a plasticizer and a surfactant, described in more detail hereafter. Optionally, and preferably, the composition contains corrosion inhibitors, pigments or dyes, such as a fluorescent dye, preservatives, bactericides and the like.

Generally, the preferred composition will comprise an aqueous solution or dispersion containing

a) at least 1% by weight of a carboxymethyl cellulose polymer;

b) at least 5% by weight of plasticizer; and

c) where present at least 0.025% by weight of a surfactant.

The carboxymethyl cellulose gum employed in this invention is a polymer, commercially available in the form of sodium carboxymethyl cellulose from Hercules Inc. or Aqualon Company. The product is available in varying ranges of viscosity and substitution and purity, from technical grade to a minimum purity of 99.5%. The polymer is non-toxic and accordingly safe to use in the work place.

2

The cellulose gum is produced by reacting alkali cellulose with an etherifying agent, such as sodium monochloroacetate, so as to substitute carboxymethyl groups for some of the hydrogen atoms of the hydroxyl groups in the anhydroglucose units of the polymer. Each anhydroglucose unit contains three hydroxyl groups. The average number of hydroxyl groups substituted per anhydroglucose unit is known as "degree of substitution," commonly referred to as "DS." While theoretically a DS of a 3 is possible, as a practical matter degrees of substition, or DS, of from 0.4 to 1.5 are available. Average chain length and DS determine molecular weight of the polymer, which typically will range from about 90,000 to 700,000. The preferred polymers employed in this invention will have a DS on the order of 0.65 to 1.30 with the most preferred being from 0.7 to 1.2. The most desirable molecular weight will be in the range of 150,000 to about 300,000 with 250,000 being preferred. The higher the molecular weight, and degree of polymerization, the higher the viscosity developed in aqueous solution. ror example a 1% concentration at 25°C of a high viscosity type having a DS of 0.7 to 0.9 and molecular weights above 300,000 to 700,000, will develop viscosities on the order of 1,500-6,000 centipoises (cps). A medium viscosity type, a DS of 0.7-1.2 and a molecular weight of 150,000-300,000 at a 1% concentration will provide a viscosity of 100-3100 cps. Low viscosity types will provide viscosities in the order of 25-100 cps at a 2% concentration.

As noted earlier above, plasticizers are employed in the composition. A wide variety of placticizers can be employed. The plasticizer employed may be a single one, although it is preferred to use a mixture of 2 or more placticizers to provide the most desirable combination of properties for the masking composition. Illustrative of such plasticizers are hydroxyl containing compounds which are compatible with the cellulose gum, such as diols (glycols) and triols. Preferred compounds useful as plasticizers are glycerin (1,2,3 propane triol), propylene glycol (1,2 propane diol) and polyoxyethylene glycols. As indicated, while each of these plasticizers may be individually employed, mixtures thereof are preferred as each contributes some specialized properties to the composition. Thus, glycerin provides the desired degree of tackiness. The degree of tackiness desired can then be regulated by the amount of glycerin employed. Propylene glycol which is unique among the glycols in that it is very low in toxicity, also acts as a wetting agent for dispersing of the cellulose gum. The polyethylene or polyoxyethylene glycols, which are also low in toxicity also serves to function as a surfactant in combination with propylene glycol and aide to promote good adhesion, flexibility and film strength. A variety of polyethylene glycol products of differing molecular weights are commercially available, varying from 200 to 6,000. The polymers of ethylene glycol are derived from the condensation of ethylene glycol or of ethylene oxide and water. For the purposes of this invention the liquid polyethylene glycols are preferred. These will generally be the lower molecular weight glycols, on the order of 200-1,000 molecular weight, with those having an average molecular weight range of 300-500 being preferred. Such preferred polyethylene glycols will contain from 4-12 repeating ethylene oxide ($OCH_2CH_2$) units.

A surfactant is employed in the composition which in addition to being a wetting agent and dispersant functions as well as a defoamer and viscosity stabilizer. Such a surfactant is an acetylenenic glycol, available commercially from Air Products and Chemicals Inc., under the name Surfynol. The preferred product is Surfynol 104, 2,4,7,9-tetramethyl-5-decyn-4,7-diol. When employed in the present invention the product is used in a 50% by weight solution in ethylene glycol. The acetylenic diol is also available in a 50% by weight solution in 2-ethylhexanol and a 75% by weight solution in ethylene glycol. The product is a nonionic surfactant which does not degrade in alkaline solutions. The product, which is soluble in water up to 0.1% by weight, also improves adhesion to metal or chalked surfaces, much as surfaces found in paint spray booths, where the masking composition finds its primary setility, and for masking car surfaces when painting. The nonionic acetylenic diol surfactant functions to lower the surface tension from 72 dynes/cm (the surface tension of water) to 30 to 36 dynes/cm.

The masking compositions of the present invention will accordingly comprise an aqueous solution or dispersion of

(1) a carboxymethyl cellulose gum in on amount by weight based on the total maskant composition of at least 1% by weight up to about 5% by weight;

(2) a plasticizer in an amount of at least 5% by weight up to about 15% by weight; and

(3) 0 up to 0.1% by weight, preferably at least 0.025% when present.

In the absence of a surfactant, the compositions are highly viscous more of a thixotropic character. The preferred compositions, however, contain at least 0.025% by weight of a surfactant.

The amount of carboxymethyl cellulose gum polymer generally will not exceed 5% by weight of the total composition and is employed in an amount to provide the desired viscosity for application to the walls and equipment in the paint spray booth or the surface to be masked when painting, a viscosity generally in the range of 3,000 to 15,000 cps, more desirably 5,000 to 12,000 cps. Where desired, thixotropic composition can be formulated. Preferably the amount of carboxymethyl cellulose gum lies in the range of 1.5 to 4% by weight of the total masking composition.

The plasticizer amount will generally not exceed 15% by weight of the total composition and is employed in an amount to provide the desired tackiness, adhesion, flexibility and film strength. Generally the amount of plasticizer will lie in the range of 5 to 12% by weight of the total composition more desirable 6 to 11.

As indicated earlier a mixture of plasticizers is preferred to provide the combination of desired properties. The preferred mixture is a mixture of (x) glycerin, (b) propylene glycol and (c) a polyoxyethylene glycol. The glycerin will predominate in the mixture from 55 to 75% by weight of the total plasticizer mixture, preferably 58-70%. The propylene glycol will range from 15-30% and the polyethylene glycol from 10-20% by weight of the plasticizer component. The glycerin in the plasticizer mixture will range on a weight ratio to polyethylene glycol of 3 to 6:1. The weight ratio of propylene glycol to polyethylene glycol in the plasticizer mixture will range from 1.2 to 1.6:1.

As noted earlier a variety of optional ingredients are optionally but usually employed in the composition. Because metal surfaces are encountered in spray booths and in paint equipment, a corrosion inhibitor is usually employed. Any corrosion inhibitor compatible with the other components of the composition may be employed. Corrosion inhibitors found to be particularly useful are carboxylic acid amides, cyclohexanamine or 6-[1-oxoisononyl] amino hexanoic acid, such a product being available commercially as Hostachlor 2732 from American Hoechst. Along with the corrosion inhibitor (Hostachlor 2732) a neutralizer therefor is generally employed, such as triethanolamine, which also serves to increase pH so that the masking composition is compatible with the spray booth pit water. Thus, when the water soluble masking composition is to be removed from the walls and equipment in the spray booth for clean up, it need not be separated from the pit water or other precautions taken to isolate it therefrom. Other neutralizer or pH control compounds may be employed, provided they are compatible with the masking composition and the spray booth pit water.

Also optional ingredients such as preservatives or bactericides are generally added, which are compatible with the ingredients of the masking compositions and the system or environment in which the masking composition is used. One such preservative found to be particularly useful in Vancide TH, hexahydro-1,3,5-triethyl-s-triazine, available commercially from ICI Americas Inc.

The compositions described are water based masking materials that form a slight, tacky, shiny, generally clear coating. The aqueous solution or dispersion is a protective coating for all paint spray booth surfaces and equipment, where overspray accumulation must be readily removed. The clear coating is intended to maximize the trapping of dust, dirt, and other airborne debris while not altering the appearance of the original substrate on which it is applied. The applied film is easily removed with water and is environmentally safe.

Where a clear coating is not desired, pigments and dyes may be added to the masking composition, to provide any desired color. Titanium dioxide is commonly employed to provide a white coating. A wide variety of pigments and dyes are commercially available. Incorporation of a fluorescent dye is particularly useful, which through use of a black light unit, ultraviolet light, rendering it possible to identify where the clear spray booth masking was applied, to ensure no uncoated spots have been left. A fluorescent whitening agent found useful in the compositions of this invention is Phorwite AR, a stilbene, fluorescent, whitening agent, 1,1'-(1,2-ethenediyl) bis [benzene] available from Mobay Chemical Corporation.

The invention can be further illustrated by means of the following examples, in which all parts and percentages are by weight unless otherwise noted. The materials employed in the examples referred to by tradename have either been identified in the description above or are identified in the example.


EXAMPLE I


A clear, tacky, water washable masking composition was prepared using the ingredients below at the amounts stated. The water and carboxymethyl cellulose were mixed until clear after which the remaining ingredients were slowly added individually with mixing.

| % | Ingredient |
|---|---|
| 87.5 | Water-deionized (DI) |
| 2.75 | Cellulose gum 12M31 (sodium carboxymethyl cellulose - available from Aqualon Company - a molecular weight of about 250,000) |
| 0.05 | Phorwite AR (fluorescent dye) |
| | Plasticizers |
| 3.0 | (a) Glycerin (USP 99%) |
| 1.5 | (b) Propylene glycol |
| 1.0 | (c) Polyglycol E400 (polyethylene glycol having an average molecular weight of about 400 - available from Dow Chemical) |
| 3.0 | Triethanolamine (neutralizer) |
| 1.0 | Hostachor 2732 (corrosion inhibitor) |
| 0.1 | Vancide TH (preservative) |
| 0.1 | Surfynol 104E (surfactant) |

The product was applied to paint spray booth for testing and performed satisfactorily, being easily removed with water.

Similarly, another satisfactory clear masking composition was prepared and performed satisfactorily. The composition can be seen in Example II below, which composition was prepared and mixed in the same manner as Example I.

| EXAMPLE II | |
|---|---|
| % | Ingredient |
| 86.58 | Water - DI |
| 3.25 | Cellulose gum 12M31 |
| 0.05 | Phorwite |
| 3.50 | Glycerin (USP 99%) |
| 1.50 | Propylene glycol |
| 1.00 | Polyglycol E400 |
| 3.00 | Triethanolamine |
| 1.00 | Hostachor 2732 |
| 0.10 | Vancide TH |
| 0.10 | Surfynol 104E |

Total solids - 10.8%

Specific gravity - 1.0309

pH - 9.9

Viscosity - about 5500 cps.

EXAMPLE III

A white masking composition was prepared from the ingredients and amounts indicated below. The ingredients were mixed in the same manner as Examples I and II.

5

| % | Ingredients |
|---|---|
| 68.05 | Water - DI |
| 2.75 | Cellulose gum 12M31 |
| 1.50 | *Titanium dioxide |
| 12.00 | *Verfine (very fine calcium carbonate - available from White Pigment Corporation) |
| 7.50 | Glycerin (USP 99%) |
| 2.00 | Propylene glycol |
| 1.50 | Polyglycol E400 |
| 3.50 | Triethanolamine |
| 1.00 | Hostachor 2732 |
| 0.10 | Vancide TH |
| 0.10 | Surfynol 104E |

Total solids - 28.5%

Specific gravity - 1.15

pH - 10.0

Viscosity - about 12500 cps.

* Titanium dioxide and Verfine mixed together, then added to clear solution of water and gum.


EXAMPLE IV


In this example a composition was prepared which was very effective but the viscosity was very high, more of a thixotropic material. The composition was an excellent masking material. This formulation was an prepared by first premixing two different cellulose materials with water until clear, to provide parts A and B premix, then adding premix A to premix B before adding the remaining ingredients individually.

| Premix A | |
|---|---|
| 71.4% | Deionized water |
| 1.0% | Cellulose gum 7H (sodium carboxymethyl cellulose - available from Aqualon Company - a molecular weight of above 300,000) |
| Premix B | |
| 14.25% | Deionized water |
| 0.75% | Cellulose gum 7M2 (sodium carboxymethyl cellulose - available from Aqualon Company - a molecular weight of between 150,000-300,000) |
| Other Ingredients | |
| 6.00% | Glycerin (USP 99%) |
| 1.50% | Propylene glycol |
| 1.00% | Polyglycol E400 |
| 3.00% | Triethonolamine |
| 1.00% | Hostachor 2732 |
| 0.10% | Vancide TH |

It should be noted that no surfactant is present in this last formulation, which is accordingly highly viscous. The formulation is of particular use in masking surfaces to be painted, protecting the already painted areas. Because of the high viscosity an orange peel effect results in the film.

In a conventional paint spray booth the maskant compositions are employed in a method wherein the surfaces of the spray booth, i.e. walls, floors, ceilings, and equipment assoicated with paint spray booths, such as painting equipment, sprayers and the like with their hoses etc. are coated with the aqueous maskant composition usually by spraying or otherwise being applied thereto by roller or brush. Airless spray equipment is recommended. The material is preferably sprayed in a uniform film of 10 to 15 mils wet thickness. The film will be damp but non-smearing in 30 to 40 minutes and dry in 60 minutes. The coating forms a film on the booth surface and equipment to mask these from paint overspray during the painting of articles in the booth. Periodically, after repeated paintings of articles, the water soluble maskant film is then removed from the booth surface and equipment by washing down the water soluble film with water. Afterwards a new coating of the maskant composition is applied for another painting cycle.

## Claims

1. A maskant composition comprising an aqueous solution or dispersion of
   (1) at least about 1% by weight based on the total maskant composition of a carboxymethyl cellulose gum;
   (2) at least about 5% by weight of a plasticizer; and when present
   (3) at least about 0.025% by weight of a surfactant

2. A maskant composition as defined in claim 1 wherein said carboxymethyl cellulose gum is sodium carboxymethyl cellulose having a DS of about 0.4 to about 1.5 and an average molecular weight of about 90,000 to about 700,000 and said plasticizer is selected from the group consisting of:
   (a) glycerin
   (b) propylene glycol
   (c) a polyethylene glycol having an average molecular weight of about 200 to about 6,000 and mixtures of (a) (b) and (c).

3. A maskant composition as defined in claim 2 wherein said carboxymethyl cellulose has a degree of substitution of about 0.7 to about 1.2 and is employed in an amount of about 1% to about 5% by weight.

4. A maskant composition as defined in claim 3 wherein said carboxymethyl cellulose is employed in an amount of about 1.5 to about 4% by weight.

5. A maskant composition as defined in claim 2 wherein said plasticizer is a mixture of glycerin, propylene glycol and a polyethylene glycol having a molecular weight in the range about 200 to about 1,000 and is employed in an amount of about 5% to about 15% by weight.

6. A maskant compostion as defined in claim 4 in which said mixture is present in an amount of about 5% to about 12% by weight.

7. A maskant composition as defined in claim 5 wherein said glycerin is present at about 55 to abut 75% by weight of said plasticizer mixture, said propylene glycol is present at about 15 to about 30% by weight and said polyethylene glycol is present at about 10-20% by weight.

8. A maskant composition as defined in claim 3 wherein said surfactant is present in an amount effective to reduce the surface tension of said aqueous maskant composition to about 30 to about 36 dynes/cm.

9. A maskant composition as defined in claim 7 wherein said surfactant is an acetylenic glycol.

10. A maskant composition as defined in claim 8 wherein said acetylenic glycol is 2,4,7,9-tetramethyl-5-decyn-4,7-diol.

11. A maskant composition as defined in claim 9 wherein said acetylenic glycol is present in an amount by weight of about 0.025 to about 0.1% based on the total weight of maskant composition.

12. A maskant composition as defined in claim 1 and further comprising a fluorescent dye.

13. A maskant compositin as defined in claim 11 wherein said fluoresent dye is a stilbene derivative.

14. A maskant composition as defined in claim 12 wherein said fluorescent dye is 1,1′-(1,2-ethenediyl) bis [benzene].

15. A maskant composition as defined in claim 1 and further comprising a pigment.

16. A maskant composition as defined in claim 14 wherein said pigment is titanium dioxide.

17. A maskant compositin having the following composition by weight based on the total maskant composition.

7

| Ingredients | % |
|---|---|
| Water | 87.5 |
| Carboxymethyl cellulose gum | 2.75 |
| Fluorescent dye | 0.05 |
| Plasticizer: | |
| (a) Glycerin | 3.0 |
| (b) Propylene glycol | 1.5 |
| (c) Polyethylene glycol | 1.0 |
| Triethanolamine | 3.0 |
| Corrosion Inhibitor | 1.0 |
| Preservative | 0.1 |
| Surfactant | 0.1 |

18. A maskant composition having the following composition by weight based on the total maskant composition.

| Ingredient | % |
|---|---|
| Water | 86.58 |
| Carboxymethyl cellulose gum | 3.25 |
| Fluorescent dye | 0.05 |
| Glycerin | 3.50 |
| Propylene glycol | 1.00 |
| Polyethylene glycol | 1.00 |
| Triethanolamine | 3.00 |
| Corrosion Inhibitor | 1.00 |
| Preservative | 0.10 |
| Surfactant | 0.10 |

19. A maskant composition having the following composition by weight based on the total maskant compsition.

| Ingredient | % |
|---|---|
| Water | 68.05 |
| Carboxymethyl cellulose gum | 2.75 |
| Pigment | 13.50 |
| Glycerin | 7.50 |
| Propylene glycol | 2.00 |
| Polyethylene glycol | 1.50 |
| Triethanolamine | 3.00 |
| Corrosion Inhibitor | 1.00 |
| Preservative | 0.10 |
| Surfactant | 0.10 |

20. A maskant composition having the following composition by weight based on the total maskant composition.

| Ingredient | % |
|---|---|
| Water | 85.65 |
| Carboxymethyl cellulose gum | 1.75 |
| Glycerin | 6.00 |
| Propylene glycol | 1.50 |
| Polyethylene glycol | 1.00 |
| Triethanolamine | 3.00 |
| Corrosion Inhibitor | 1.00 |
| Preservative | 0.10 |

21. A method of maintaining paint spray booths against build up of overspray paint while painting surfaces within said spray booth comprising

(a) applying to the surfaces of said paint spray booth and painting equipment associated therewith, the maskant composition of claim 1 to form a film on, and mask, said surfaces and equipment from paint being applied thereto, and

(b) subsequent to painting an article in said paint spray booth washing said film from said masked surfaces and equipment with water, so as to remove said maskant composition from said surfaces and equipment.

9

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| Y | US-A-4 548 967 (W. BROWN) <br> * Abstract; claims; example 3 * | 1,21 | C 09 D 101/28 <br> B 05 D 5/00 |
| Y | US-A-2 986 471 (E. RUDD) <br> * Column 1, lines 53-60; column 3, lines 3-5 * | 1,21 | |
| Y | GB-A- 583 241 (H.H. ROBERTSON CO.) <br> * Claims * | 1,21 | |
| A | CHEMICAL ABSTRACTS, vol. 73, no. 10, 7th September 1970, page 70, abstract no. 46800w, Columbus, Ohio, US; & JP-A-70 07 421 (TOKYO SHIBAURA ELECTRIC CO., LTD) 14-03-1970 <br> * Abstract * | 1 | |

TECHNICAL FIELDS SEARCHED (Int. Cl.5)

C 09 D
C 08 L
C 08 K

The present search report has been drawn up for all claims

| Place of search | Date of completion of the search | Examiner |
|---|---|---|
| THE HAGUE | 27-09-1990 | SOMERVILLE F.M. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)